# EUROPEAN PATENT APPLICATION

(11) **EP 4 009 592 A1**
(43) Date of publication of application: **08.06.2022**
(21) Application number: 20861929.6
(22) Date of filing: 12.02.2020
(51) Int. Cl.: H04L 12/46

(54) **METHOD FOR CONFIGURING PORT STATE AND NETWORK DEVICE**

(30) Priority: 04.09.2019 CN 201910831977
(71) Applicant: Xiamen Wangsu Co., Ltd., Xiamen, Fujian 361003 (CN)
(72) Inventor: CHEN, Kailin, Xiamen, Fujian 361003 (CN)
(74) Representative: Würmser, Julian
(86) International application number: PCT/CN2020/074970
(87) International publication number: WO 2021/042674

(57) **Abstract**

Disclosed are a port state configuration method and a network device. The method includes: identifying a port type of a current port connected to a layer-2 tunnel, setting, in response to the current port being a designated port, an initial state of the designated port to a blocking state, and adjusting, in response to the designated port being connected to a root port through the layer-2 tunnel, a state of the designated port from the blocking state to a forwarding state (SI); setting, in response to the current port being a root port, an initial state of the root port to the forwarding state and sending a notification message for characterizing an identity of a root port to a port on an opposite side through the root port (S3); and setting, in response to the current port being an alternate port other than the designated port and the root port, an initial state of the alternate port to the blocking state (S5).

## Description

### CROSS REFERENCE TO RELATED APPLICATIONS

The present disclosure claims the benefit of priority to Chinese patent application No. 201910831977.0, entitled "Port State Configuration Method and Network Device" and filed September 4, 2019, which is incorporated herein by reference in its entirety.

### TECHNICAL FIELD

The present disclosure relates to the field of Internet technologies, and in particular, to a port state configuration method and a network device.

### BACKGROUND

At present, in order to quickly converge the network when a network structure changes, a Spanning Tree Protocol (STP) or a Rapid Spanning Tree Protocol (RSTP) may usually be adopted. When the STP or the RSTP is adopted, a port of a network device may be in a variety of different states. Taking the RSTP as an example, the states of a network port may include a forwarding state (Forwarding) or a blocking state (Blocking or Discarding). These states of the port may usually have a corresponding relation with the type of the port. For example, a root port (RP) and a designated port (DP) are usually in the forwarding state, and an alternate port (AP) other than the root port and the designated port may be in the blocking state, which can ensure that when a data message is transmitted among the network devices, a transmission loop is avoided.

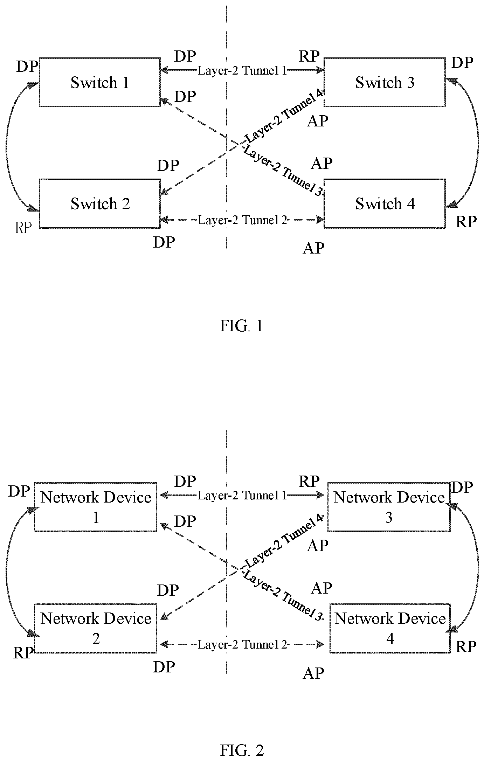

Referring to an application example of the network structure shown in FIG. 1, a plurality of switches of both communication parties may be included, and switches on different sides may be connected through layer-2 tunnels. After configuring port states in accordance with the RSTP, a switch 1 is a root bridge, and each port on the switch 1 is the DP. On a switch 2, a port connected to the switch 1 is the RP, and two ports of the switch 2 connected to layer-2 tunnels are the DPs. Among ports of a switch 3 and a switch 4 connected to the layer-2 tunnels, only the port connected to the right side of a layer-2 tunnel 1 is the RP, and the other three ports are the APs. And on the switch 3, the port connected to the switch 4 is the DP, while on the switch 4, the port connected to the switch 3 is the RP. Here, the DPs may all be in the forwarding state. In this way, in the four layer-2 tunnels, only the layer-2 tunnel 1 is actually unobstructed. When receiving a same data message, the switch 1 and the switch 2 may send the data message outward from each port. However, only the data message transmitted by the layer-2 tunnel 1 may be received by the switch 3, and the data messages transmitted by the layer-2 tunnels 2, 3, and 4 may be discarded, thus avoiding the repeated reception of the same data message. However, for this same data message, it is transmitted simultaneously through four links, which may result in four times of data flow. Therefore, the flow may be wasted in accordance with the existing port state configuration method.

### SUMMARY

Some embodiments of the present disclosure are intended to provide a port state configuration method and a network device, which can avoid a waste of flow during a data transmission.

In order to achieve the above objective, the present disclosure provides a port state configuration method. The method includes identifying a port type of a current port connected to a layer-2 tunnel, setting, in response to the current port being a designated port, an initial state of the designated port to a blocking state, and adjusting, in response to the designated port being connected to a root port through the layer-2 tunnel, a state of the designated port from the blocking state to a forwarding state; setting, in response to the current port being a root port, an initial state of the root port to the forwarding state, and sending a notification message for characterizing an identity of a root port to a port on an opposite side through the root port; and setting, in response to the current port is an alternate port other than the designated port and the root port, an initial state of the alternate port to the blocking state.

In order to achieve the above objective, the present disclosure further provides a network device. The network device includes a plurality of ports connected to at least one layer-2 tunnel. An initial state of a respective port of the plurality of ports is set to a blocking state in response to the respective port being a designated port, and a state of the designated port is adjusted from the blocking state to a forwarding state in response to the designated port being connected to a root port through one of the at least one layer-2 tunnel; the initial state of the respective port is set to the forwarding state, and a notification message for characterizing an identity of a root port is sent to a port on the opposite side through the root port in response to the respective port being a root port; and, the initial state of the respective port is set to the blocking state in response to the respective port being an alternate port other than the designated port and the root port.

It can be seen from the above that the technical solution provided by the present disclosure may identify the type of the port that is connected to the layer-2 tunnel on a network device. If the port is a designated port, the initial state of the designated port may be set to the blocking state instead of the forwarding state in the existing technologies. Subsequently, if it is determined that the designated port is connected to a root port through the layer-2 tunnel, the state of the designated port is adjusted from the blocking state to the forwarding state. If the port is a root port, the initial state of the root port may be set to the forwarding state. In addition, the notification message for characterizing the identity of the root port may be sent to the port on the opposite side through the root port. However, in the existing technologies, the root port does not send the notification message to the port on the opposite side. After being improved in this way in the present disclosure, the designated port may be informed that the port on the opposite side is the root port, thereby adjusting the port state of the designated port. If the port is an alternate port other than the designated port and the root port, the initial state of the port may be set to the blocking state. Continuing with FIG. 1 as an example, by the above-mentioned port state configuration method, since the designated port on the left side of the layer-2 tunnel 1 is connected to the root port, the designated port is adjusted to the forwarding state, and the root port on the right side of the layer-2 tunnel 1 is in the forwarding state, the layer-2 tunnel 1 may normally transmit a data message. Although the ports on the left side of a layer-2 tunnel 2-4 are all the designated ports, the ports on the right side are all alternate ports, so that the state of the designated ports on the left side of the layer-2 tunnel 2-4 remains in the blocking state. In this way, the data message may only be transmitted through the layer-2 tunnel 1, and may not be transmitted on other layer-2 tunnels, thus solving the problem of a waste of flow.

### BRIEF DESCRIPTION OF THE DRAWINGS

In order to describe the technical solutions of the embodiments of the present disclosure more clearly, the drawings used in the description of the embodiments are briefly described below. It is obvious that the drawings descripted below are only some embodiments of the present disclosure. For those skilled in the art, further drawings may be obtained in accordance with these drawings without any creative effort.
FIG. 1 is an application example of a network structure;
FIG. 2 is a schematic diagram of a connection between network devices in an embodiment of the present disclosure;
FIG. 3 is a schematic diagram of steps of a port state configuration method in an embodiment of the present disclosure;
FIG. 4 is a schematic diagram of a connection between a network device and a switch in an embodiment of the present disclosure;
FIG. 5 is a schematic diagram of a first structure of a layer-2 dedicated line network system in an embodiment of the present disclosure;
FIG. 6 is a schematic diagram of a second structure of a layer-2 dedicated line network system in an embodiment of the present disclosure.

### DETAILED DESCRIPTION

In order to make the objective, the technical solution and the advantages of the present disclosure clearer, embodiments of the present disclosure are further explained below in detail with reference to the accompanying drawings.

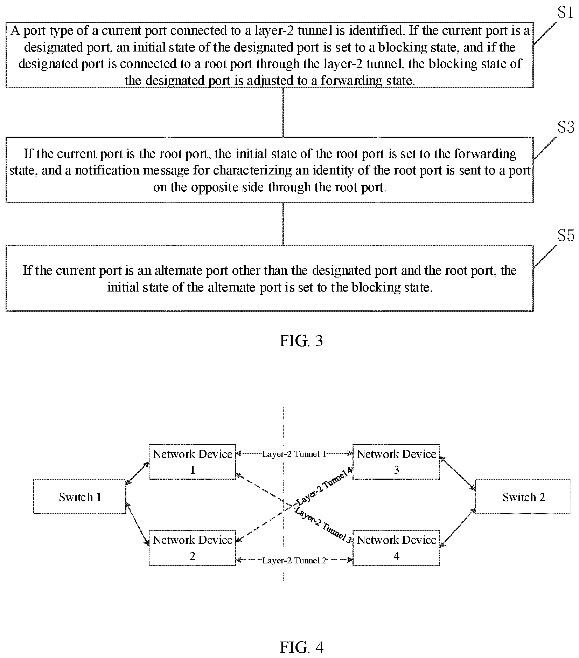

An embodiment of the present disclosure provides a port state configuration method, which may be applied to a network device supporting STP or RSTP. Referring to FIG. 2 and FIG. 3, the method may include the following steps.

In S1, a port type of a current port connected to a layer-2 tunnel is identified. If the current port is a designated port, an initial state of the designated port is set to a blocking state, and if the designated port is connected to a root port through the layer-2 tunnel, the state of the designated port is adjusted from the blocking state to a forwarding state.

In this embodiment, the network devices may be connected through the layer-2 tunnel, thereby establishing a layer-2 dedicated line network between network devices located in different geographic locations. As shown in FIG. 2, a plurality of network devices may be distributed in different geographic locations, and any network device may establish the layer-2 tunnel with other network devices on the opposite side. One or more ports may be deployed on the network device, and these ports may be connected to different layer-2 tunnels respectively.

In this embodiment, after a network topology is determined, the network devices may determine whether the network device is a root bridge or a non-root bridge by sending a Bridge Protocol Data Unit (BPDU) message to each other, and then may determine the port type of each port on the network device. These port types may include a root port (RP), a designated port (DP), and an alternate port (AP).

In this embodiment, in order to avoid a waste of flow, after determining the port type of each port on the network device, the initial state of each port and the state during data transmission may be changed. Specifically, in the network device, the port type of the current port connected to the layer-2 tunnel may be identified first. It should be noted that the ports in the network device are not necessarily all connected to the layer-2 tunnel, and some ports may also be connected to other network devices such as a switch. This embodiment can only improve the ports connected to the layer-2 tunnel. The port type of each port in the network device may be determined by the STP or the RSTP. By obtaining a determination result of the STP or the RSTP, the port type of the current port may be identified. The current port may be any port connected to the layer-2 tunnel in the network device.

If the port type of the current port is the designated port, the initial state of the designated port in the existing technologies is usually the forwarding state. However, in this embodiment, the initial state of the designated port may be set to the blocking state. In the existing technologies, the state of the designated port usually does not change during a normal data transmission. However, in this embodiment, for the designated port whose initial state is the blocking state, if it is determined that the designated port is connected to the root port through the layer-2 tunnel, the state of the designated port may be adjusted from the blocking state to the forwarding state.

Referring to FIG. 2, after the network topology is determined and the root bridge and the non-root bridge are selected in accordance with the STP or the RSTP, a network device 1 may serve as the root bridge and network devices 2 to 4 may serve as the non-root bridge. At the same time, when a network convergence is implemented according to the STP or the RSTP, the port type of each port in the network device may be determined. Specifically, the ports in the network device 1 may all be the designated ports. The port connected to a layer-2 tunnel 1 in the network device 3 may serve as the root port because it is closest to the root bridge, while the port connected to a layer-2 tunnel 4 in the network device 3 may serve as the alternate port. The two ports connected to a layer-2 tunnel 2 and the layer-2 tunnel 4 in the network device 2 may be the designated ports, and the two ports connected to the layer-2 tunnel 2 and a layer-2 tunnel 3 in the network device 4 may be the alternate ports. After the port type of each port is determined, in accordance with the above-described operation mode of this embodiment, the four ports on the left side of the layer-2 tunnel are all the designated ports, so the initial states of these four ports are all set to the blocking state. Since the port on the right side of the layer-2 tunnel 1 is the root port, the state of the port on the left side of the layer-2 tunnel 1 is adjusted to the forwarding state because it is connected to the root port. Finally, of the four ports on the left side of the layer-2 tunnel, only the port connected to layer-2 tunnel 1 in network device 1 is in the forwarding state, and the other three ports are all in the blocking state.

In S3, if the current port is a root port, the initial state of the root port is set to the forwarding state, and a notification message for characterizing an identity of a root port is sent from the root port to a port on the opposite side.

In this embodiment, if the current port is the root port, the initial state of the root port may be set to the forwarding state. In addition, the root port in the existing technologies usually does not send a BPDU message. However, in this embodiment, since the state of the designated port needs to be adjusted in accordance with whether the opposite side is the root port, when the state of the root port is set to the forwarding state, the notification message for characterizing the identity of the root port itself further needs to be sent from the root port to the port on the opposite side. In practical applications, the notification message may be the above-mentioned BPDU message. The BPDU message has a port role field filled with an identifier characterizing the identity of the root port. In this way, the designated port on one side may identify the port on the opposite side as the root port by identifying the content in the port role field of the notification message. In this way, the designated port may determine that the designated port is connected to the root port through the layer-2 tunnel after receiving the notification message for characterizing the identity of the root port from the port on the opposite side through the connected layer-2 tunnel, thus the state of the designated port may be adjusted from the blocking state to the forwarding state.

In an embodiment, the root port may send the forgoing notification message to the port on the opposite side in a specified time period. The specified time period may be preset, for example, the specified time period may be 2 seconds. In this embodiment, a communication failure may occur in the currently used layer-2 tunnel during a data transmission. In this case, it is necessary to select a backup layer-2 tunnel from the remaining layer-2 tunnels and continue the data transmission through the selected layer-2 tunnel. For example, when the communication failure occurs in a layer-2 tunnel 1, a layer-2 tunnel 2 may be selected to continue the communication. In this case, the port connected to the layer-2 tunnel 1 in a network device 1 may not normally receive the notification message sent by the root port on the opposite side. In view of this, if the designated port adjusted to the forwarding state does not receive the notification message sent by the port on the opposite side within a specified duration, the forwarding state of the designated port may be restored to the blocking state. The specified duration may be preset, for example, the specified duration may be 4 seconds.

In S5, if the current port is an alternate port other than the designated port and the root port, the initial state of the alternate port is set to the blocking state.

In this embodiment, if the current port is the alternate port other than the designated port and the root port, the initial state of the alternate ports may be set to the blocking state. Through the operations of the forgoing steps, of the four network devices in FIG. 2, only the ports on both sides of the layer-2 tunnel 1 are in the forwarding state, and the ports connected to the other layer-2 tunnels are all in the blocking state. In this way, the data message may only be sent from one port, thus avoiding the waste of flow.

In an embodiment, the above-described manner of configuring a port state may serve as a custom function. The custom function may be pre-configured in a network device, and the custom function may be actively turned on or off. When the custom function is turned off, the port state may be configured in the manner in the existing technologies, and when the custom function is turned on, the port state may be configured in the manner of the above steps of the present disclosure. Further, the custom function may be enabled only for some ports in the network device. For example, in a system architecture shown in FIG. 4, the network devices on different sides may be connected through a layer-2 tunnel, while the network devices on the same side may be connected to a switch. In this case, the above-described custom function may be turned on only for the ports connected to the layer-2 tunnel, while the custom function may be turned off for the ports that are not connected to the layer-2 tunnel. In this way, for the port that is not connected to the layer-2 tunnel, if the port is a designated port, an initial state of the port may be set to a forwarding state instead of a blocking state. At the same time, if the port that is not connected to the layer-2 tunnel is a root port, it is not necessary to periodically send a notification message to the port on the opposite side. The reason for this processing is that if the above-described custom function is also enabled on the port connected to the switch, the system may be paralyzed. For example, assuming that a network device 1 is a root bridge at this time, the ports in the network device 1 are all the designated ports, and the port where a network device 2 is connected to the switch is the root port. If the above-described custom function is enabled on all the ports where the network device 1, the network device 2 and a switch 1 is connected, the designated ports and the root port may be in the forwarding state at this time. However, if the network device 2 suddenly fails, the port connected to the switch on the network device 1 may not receive the notification message sent by the port on the opposite side. In this case, the network device 1 may readjust the port connected to the switch to the blocking state, so that when the network device 2 fails, the network device 1 closes a data forwarding function of the port. In this way, the data message sent by the switch may not be transmitted backward, thus resulting in the paralysis of the whole layer-2 dedicated line network. Therefore, for a port not connected to the layer-2 tunnel, the above-described custom function may not be enabled, but the port state configuration is carried out by using the method in the existing technologies.

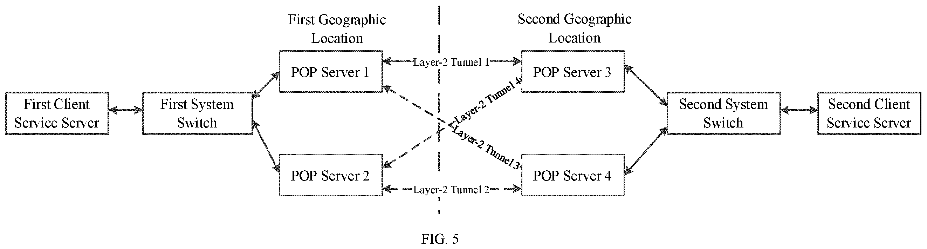

In a specific application example, the above-described port state configuration method may be applied to a point of presence (POP) server in a layer-2 dedicated line network system as shown in FIG. 5. Referring to FIG. 5, the system may include a system switch and the POP server. Generally speaking, the layer-2 dedicated line network may be configured to transmit a data message between different client service servers. These client service servers may be distributed in different cities or in geographically distant locations in the same city. In the present disclosure, in order to improve the stability of the layer-2 dedicated line network, a plurality of layer-2 tunnels may be established between the POP servers on different sides and the system switch may be connected to each POP server on the same side.

In practical applications, an OpenVirtualSwitch (OVS) or other software with similar functions may be run in each pop server. With the OVS or the other software with similar functions, the POP server may be configured to realize a layer-2 dedicated line network. Specifically, a communication protocol for implementing the layer-2 dedicated line network may be enabled on each POP server, and the communication protocol may be for example, a STP or a RSTP. Through the enabled communication protocol, a priority may be set for the POP server, and a link cost value may be assigned to each port of the POP server. In practical applications, the above-described priority and link cost value may be a numerical value, wherein the smaller the numerical value, the higher the priority, and the larger the numerical value, the higher the link cost value. The assigned priority and link cost value may be configured to determine the port type of each port on the POP server. Specifically, different link cost values may be assigned for the ports connected to different layer-2 tunnels, while the ports on both sides of the same layer-2 tunnel may be assigned the same link cost value. For example, in FIG. 5, four layer-2 tunnels are established, then the four layer-2 tunnels may correspond to different four link cost values (e.g., 100, 110, 120 and 130 respectively), while for a layer-2 tunnel 1, two ports on its both sides may be configured with the link cost value of 100.

In an embodiment, a root bridge may be selected in accordance with a priority of each POP server. Specifically, the POP server with the highest priority may be taken as the root bridge. If there is a plurality of POP servers with the highest priority, the POP server with a smallest bridge ID may be taken as the root bridge. Here, the bridge ID may be a sum of the priority and a Media Access Control (MAC) address of the POP server. After the root bridge is selected, the port type of each port on the root bridge may be a designated port.

In this embodiment, after the root bridge is selected, the port type of each port on the other POP servers may be determined. Specifically, for the current POP server, a link cost value between each port and the root bridge may be determined, and the port with the smallest link cost value is taken as the root port. If there is a plurality of ports with the smallest link cost value, the port with the lowest port ID may be taken as the root port. The port ID may be the sum of the priority and port number of the POP server.

In this embodiment, after the root port on the POP server is determined, the designated port on the POP server may be determined. Specifically, for a communication link, if one of the two ports on both sides of the communication link is the root port, the other port may be taken as the designated port. If neither of the two ports on both sides of the communication link is the root port, one of the two ports may be selected as the designated port. In practical applications, within the two ports, the port with smaller link cost value with the root bridge within the two ports may be identified firstly, and the port with smaller link cost value is taken as the designated port. However, if the link cost values are the same, the designated port may be determined in accordance with the priority of the POP server where the port is located. The port with the higher priority may be taken as the designated port. If the priorities are still the same, the designated port may be determined in accordance with the bridge ID of the POP server where the port is located. The port with the smallest bridge ID may be taken as the designated port.

In this way, the root port and the designated port may be determined on each POP server in the forgoing manner. The state of each port may be configured in the manner described in steps S1 to S5. For a target layer-2 tunnel, if the ports on both sides of the target layer-2 tunnel are both in a forwarding state, the target layer-2 tunnel is in the forwarding state. The data message may be transmitted normally through the target layer-2 tunnel. However, if any port of the target layer-2 tunnel is in the blocking state, the target layer-2 tunnel is in the blocking state. In the blocking state the data message may not be sent from one POP server through the layer-2 tunnel to another POP server. In this way, the plurality of layer-2 tunnels established between the POP servers on different sides can ensure that only one layer-2 tunnel is in the forwarding state at the same time after operating in the above-described manner, thus avoiding a repeated transmission of the data message through different layer-2 tunnels.

It should be noted that sometimes the communication sides of the layer-2 dedicated line network may be a symmetrical network structure, and then the priority of each POP server may be exactly the same at this time. In this case, the port type of each port may be determined by the link cost value and the MAC address without configuring the priority of each POP server.

In an embodiment, a port where a system switch is connected to a POP server may also be assigned a link cost value. In addition, in order to enable a data message sent by the system switch to reach each connected POP server normally, the link cost value of the port where the system switch is connected to the POP server may be set lower, while the link cost value of the port where the POP server is connected to the POP server on the opposite side may be set higher. In this way, for any POP server, the port connected to the system switch may have a lower link cost value than the port connected to the POP server on the opposite side. For example, in FIG. 5, the link cost value of the port where a POP server 1 is connected to the system switch may be 1, while the link cost value of a layer-2 tunnel 1 may be 100.

In this embodiment, if the POP server breaks down or the network environment fluctuates(for example, the network link is disconnected), causing the layer-2 tunnel currently in the forwarding state to be unavailable, a communication protocol running on the POP server may select a target layer-2 tunnel from the remaining available layer-2 tunnels in accordance with the assigned link cost value, and place the target layer-2 tunnel in the forwarding state, thus continuing to transmit the data message through the target layer-2 tunnel. Specifically, the layer-2 tunnel with the smallest link cost value may be selected from the remaining available layer-2 tunnels as the forgoing target layer-2 tunnel, so that the layer-2 tunnel currently in the forwarding state may be guaranteed to have the smallest link cost value among the available layer-2 tunnels all the time. The stability of data transmission may be improved through the switching method of the layer-2 tunnel.

In practical applications, the system switch usually comes with a MAC address learning function, which may automatically identify the MAC address in the data message and establish an association relationship between the identified MAC address and the port receiving the data message, thus constructing a MAC address forwarding table (fdb table). With the fdb table, the system switch may avoid sending the same data message to a plurality of different POP servers. However, in this embodiment, since the layer-2 tunnel may be switched, if the system switch only forwards the data message to a connected POP server in accordance with the fdb table, the connected POP server may not be able to send the received data message to the POP server on the opposite side through the layer-2 tunnel. For example, the layer-2 tunnel 1 in FIG. 5 breaks down and the system automatically switches to the layer-2 tunnel 2. At this time, if the system switch still sends the data message to the POP server 1 in accordance with the fdb table, the data message may not be transmitted to the opposite side. In view of this, in this embodiment, a MAC address learning function in the system switch may be turned off. In this way, when the system switch receives the data message, a destination MAC address in the data message may not be learned. Therefore, the system switch may forward the data message to each POP server connected to the system switch in a flood way, and then each POP server may try to forward the received data message through the layer-2 tunnel. According to the forgoing description, only one layer-2 tunnel is in the forwarding state at the same time. Therefore, only copy of one data message may be forwarded to the POP server on the opposite side, and other copies of data messages may not be sent to the POP server on the opposite side because the other layer-2 tunnel is in the blocking state, thus ensuring that the data message will not be transmitted repeatedly.

Referring to FIG. 5, in an embodiment, in a process of transmitting from a first client service server to a second client service server, a data message may pass through a first system switch, so the first system switch may receive the data message from the first client service server. In practical applications, the first system switch may be connected to a plurality of client service servers belonging to a first geographic location. Therefore, in order to distinguish the data messages sent by different client service servers, the first system switch may add an outer virtual local area network (vlan) identifier to the received data messages. The outer vlan identifier may be configured to characterize a client to whom the currently received data message belongs. In practical applications, a QinQ function (also called Stacked vlan or Double vlan function) may be pre-configured on a port connected to the first client service server on the first system switch, and different outer vlan identifiers may be pre-assigned for different client service servers on the first system switch. In this way, when the port receives the data message from the first client service server, it may add an outer vlan identifier matching with the first client service server to the data message.

In this embodiment, in order to forward the data message sent by the first client service server to the connected POP server 1 and POP server 2, the first system switch may configure the forgoing outer vlan identifier on a target port connected to the POP server 1 and POP server 2. In this way, from the perspective of the first system switch, the port connected to the first client service and the target port connected to the POP server 1 and the POP server 2 may be in the same vlan, so that the data message sent by the first client service server may finally be sent to the POP server 1 and the POP server 2 for processing. In addition, the first system switch may also configure the forgoing target port as a port type for retaining the outer vlan identifier, for example, it may be a trunk type. In this way, the first system switch may send the data message with the outer vlan identifier to the connected POP server 1 and POP server 2 through the target port.

In this embodiment, after receiving the data message with the outer vlan identifier, the pop server may determine the client to which the current data message belongs by identifying the outer vlan identifier, thereby determining the layer-2 tunnel for transmitting the data message. Thus, the pop server may assign corresponding layer-2 tunnels to different clients based on different outer vlan identifiers, which not only can realize data isolation between different clients and support a multi-client scenario, but also can realize a reuse of the POP server and save hardware cost. As shown in FIG. 5, the POP server 1 and the POP server 3 may be connected through the layer-2 tunnel 1. The data message transmitted on the layer-2 tunnel 1 usually need to be a pure Ethernet message. In view of this, after identifying the client to which the received data message belongs, the POP server 1 needs to strip the outer vlan identifier carried in the data message, so as to restore the Ethernet message sent by the first client service server. Finally, the restored Ethernet message may be sent to the POP server 3 through the pre-created layer-2 tunnel.

In an embodiment, a first interface corresponding to the outer vlan identifier may be pre-created in the POP server for receiving the data message with corresponding outer vlan identifier and for stripping the outer vlan identifier. In practical applications, the first interface may be created in multiple ways. For example, a multi-layer nested vlan interface may be created in a linux system, and the created multi-layer nested vlan interface is taken as the first interface described above. Specifically, please refer to the following application example:
ip link add eth0.200 link eth0 type vlan id 200

Here, eth0 may represent a physical adapter for receiving the data message. Through the physical adapter, a virtual network adapter eth0.200 (i.e., the first interface for receiving the data message) may be created for the data message with an outer vlan identifier of 200, which is specifically used to receive the data messages with the outer vlan identifier of 200. The virtual network adapter may be set with the same id as the outer vlan identifier, thus obtaining the virtual network adapter named eth0.200.

After receiving the data message with the outer vlan identifier, the physical adapter eth0 may strip the outer vlan identifier, and send the stripped data message to the virtual network adapter named eth0.200 after determining that the outer vlan identifier is 200, so that the stripping of the outer vlan identifier may be realized. At the same time, a first pop server obtains a mapping relationship between a source MAC address in the data message and the first interface through a self-learning capability of the forwarding database (fdb) table.

It is certain that, in practical applications, there may be other more ways to realize the function of strippingthe outer vlan identifier. For example, when using an open virtual switch (OVS) software to create a target bridge, an openflow may also be added to the OVS bridge, and through the added openflow, a strip vlan (for removing the vlan identifier in the data message) or other similar functions may be performed, thus realizing the stripping of the outer vlan identifier.

In this embodiment, the POP server 1 may have various implementations when creating a layer-2 tunnel connected to the POP server 3. For example, the POP server 1 may use a vxlan interface in the linux system to create a vxlan tunnel, and the vxlan tunnel may be taken as the created layer-2 tunnel. For another example, both the POP server 1 and the POP server 3 may both create an interface of type vxlan through the ovs. The layer-2 tunnel formed through these two interfaces may be taken as the layer-2 tunnel. The forgoing vxlan interface created in the linux system or the interface of type vxlan in the OVS created by the POP server 1may be taken as a second interface in the POP server 1 for connecting the layer-2 tunnels.

In this embodiment, in order to enable the data message, received by the POP server 1, to be transmitted to the POP server 3 through the layer-2 tunnel, the forgoing first interface and the second interface need to be bridged. Specifically, the POP server 1 may create a target bridge and take the forgoing first interface and the second interface as the two ports of the target bridge, thereby realizing the process of bridging the two interfaces. In practical applications, the target bridge may be created by the linux system, the ovs system or other means, which is not limited in the present disclosure. Similarly, after the data message is forwarded through the second interface, the first POP server may obtain the mapping relationship between the source MAC address in the data message and the second interface through the self-learning capability of the fdb table.

In an embodiment of the present disclosure, considering that if in the same client a plurality of client service servers in different network segments all need to create a layer-2 dedicated line, or there are a plurality of client service servers belonging to different clients in a first geographic area, a plurality of communication lines need to be established between these client service servers and the first system switch, which undoubtedly increase the burden on the first system switch. In view of this, one or more client switches may be added between the first system switch and the client service server. For example, at least one client switch may be added for each client, and these client switches may be connected to the client service server and the first system switch respectively, where the client switches and the first switch are logically directly connected in the ports, for example, directly connected through a network cable or through a dedicated line connection.

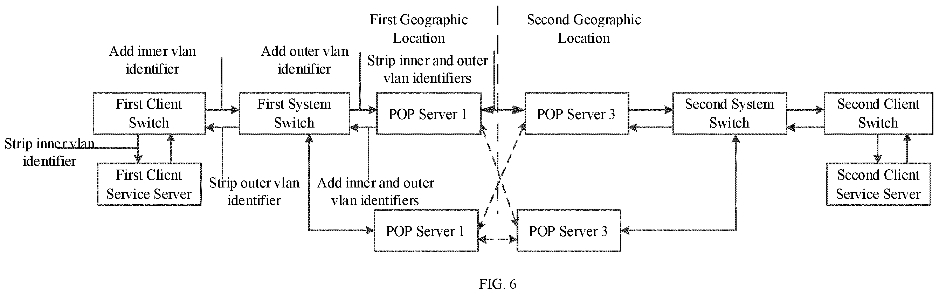

Specifically, referring to FIG. 6, a client switch is taken as an example to illustrate the solution of the present disclosure. The first client switch may receive the data message sent by each client service server. In practical applications, different client service servers may be distributed into different network segments. In order to distinguish the data messages sent by the client service servers in different network segments, the first client switch may add an inner vlan identifier to the received data message and send it to the first system switch. The inner vlan identifier may be configured to characterize the network to which the client service server sending the data message belongs.

After passing through the first client switch, the data message carries the inner vlan identifier, and after being received by the first system switch, the data message may continue to add the outer vlan identifier in the manner described above. It should be noted that in this case, the first system switch may assign different outer vlan identifiers to client switches connected with other, and add the outer vlan identifier matching with the current client switch to the data message sent by the current client switch. In this way, through a combination of the inner vlan identifier and the outer vlan identifier, a line channel for transmitting the data message may be uniquely determined, including the interface on the POP server and the corresponding layer-2 tunnel.

As shown in FIG. 6, the data message sent by the first client service server is a pure Ethernet message. The Ethernet message does not carry the inner vlan identifier or the outer vlan identifier. After passing through the first client switch, the inner vlan identifier with id 400 may be added, and after passing through the first system switch, the outer vlan identifier with id 200 may be added subsequently.

It is certain that if the client service servers connected to the first client switch are all in the same vlan, the first client switch may not add the inner vlan identifier, so that the first client switch may send the data message from the client service server to the first system switch directly.

In an embodiment, if the data message forwarded by the first system switch carries both the inner vlan identifier and the outer vlan identifier, the POP server also needs to have the function of stripping the inner vlan identifier and the outer vlan identifier. Specifically, the POP server may still add the openflow to the ovs in the above-described manner, and perform the strip_vlan or similar functions through the added openflow, thus realizing the function of stripping the inner and outer vlan identifiers. In addition, the POP server may also create the multi-layer nested vlan interface in the linux system, and realize the function of stripping the inner and outer vlan identifiers through the created multi-layer nested vlan interface. Specifically, refer to the following application examples:
ip link add eth0.200 link eth0 type vlan id 200
ip link add eth0.200.400 link eth0.200 type vlan id 400

It can be seen that according to the outer vlan identifier 200 to be stripped, a first virtual network adapter eth0.200, i.e., a first virtual network interface for receiving the data message may be created for the data message withthe outer vlan identifier 200 through a physical network adapter eth0. According to the inner vlan identifier 400 to be stripped, a second virtual network adapter eth0.200.400, i.e., a second virtual network interface for receiving the data message, is created for the data message with the inner vlan identifier 400 through the first virtual network adapter eth0.200.

In this way, the data message received by the physical network adapter may be received by the first virtual network adapter after being stripped of the outer vlan identifier, and the data message received by the first virtual network adapter may be received by the second virtual network adapter after being stripped of the inner vlan identifier, thus realizing the process of stripping of the inner and outer vlan identifiers. Meanwhile, after receiving the data message, the virtual network interface of the POP server may obtain the mapping relationship between the source MAC address in the data message and each virtual network interface through the self-learning capability of the fdb table.

It can be seen from the above that the POP server may receive the data message with the outer vlan identifier and the inner vlan identifier, strip the outer vlan identifier and the inner vlan identifier, finally restore the Ethernet message sent by the client service server, and send the Ethernet message to another POP server through the layer-2 tunnel. In addition, the virtual network interface created in the POP server may also have the function of stripping the inner vlan identifier, and the second virtual network interface still needs to be bridged with the second interface, so that the data message of the client service server may be transmitted through the layer-2 tunnel.

In this embodiment, each device deployed at a second geographic location in FIGs. 5 and 6 may perform the same function as each corresponding device at the first geographic location when processing the data message sent by the second client service server, which is not described here again. It should be noted that although the devices at the first geographic location and the devices at the second geographic location perform the same functions, it does not mean that the devices on both sides need to adopt the exactly same configuration. For example, the inner vlan identifier added by the first client switch may be different from the inner vlan identifier added by the second client switch, and the outer vlan identifier added by the first system switch may be different from the outer vlan identifier added by the second system switch.

When the POP server 1 receives the data message sent by the POP server 3, the data message is the pure Ethernet message. At this time, the POP server 1 may perform an operation opposite to the forgoing process, that is, add the outer vlan identifier to the received data message, send the data message added with the outer vlan identifier to the first system switch. Subsequently, the first system switch may strip the outer vlan identifier off the received data message and feedback to the first client service server.

If there is the first client switch between the first system switch and the first client service server, the POP server 1 may continue to add the outer vlan identifier to the received data message after adding the inner vlan identifier to the received data message, and send the data message added with the outer vlan identifier and the inner vlan identifier to the first system switch. In this way, the first system switch may send the data message with the inner vlan identifier to the first client switch after striping the outer vlan identifier. After receiving the data message stripped of the outer vlan identifier, if the data message carries the inner vlan identifier, the first client switch may strip the inner vlan identifier off the received data message and provide the restored Ethernet message to the first client service server.

The specific implementation of adding and stripping the vlan identifiers described above may be implemented by the linux system or the ovs or other similar manners with reference to the description in the previous embodiments, which is not described here again. In a practical application, the interface for forwarding the data message may be determined based on the fdb table, and when the data message reaches the corresponding interface, the corresponding vlan identifier is added, thus not only adding the corresponding identifier to the data message, but also ensuring that the transmission path of the data message sent to the client service server is the same as that of the data message sent from the client service server, thus enabling the data message to reach the client service server smoothly.

It should be noted that after receiving the Ethernet message sent by the POP server 1, the POP server 3 may process the Ethernet message in a way similar to the forgoing manner. For example, in FIG. 6, the POP server 3 may add an outer vlan identifier with id 300 and an inner vlan identifier with id 500 to the received Ethernet message, the second system switch may strip the outer vlan identifier with id 300, and the second client switch may strip the inner vlan identifier with id 500.

The present disclosure further provides a network device. The network device includes a port connected to a layer-2 tunnel, where if the port is a designated port, an initial state of the designated port is set to a blocking state, and if the designated port is connected to a root port through the layer-2 tunnel, the blocking state of the designated port is adjusted to a forwarding state; if the port is the root port, the initial state of the root port is set to the forwarding state, and a notification message for characterizing an identity of the root port is sent to the port on the opposite side through the root port; and if the port is an alternate port other than the designated port and the root port, the initial state of the alternate port is set to the blocking state.

It can be seen from the above that the technical solution, provided by the present disclosure, may identify the type of the port connected to the layer-2 tunnel on the network device. If the port is the designated port, the initial state of the designated port may be set to the blocking state instead of the forwarding state in the existing technologies. Subsequently, if it is judged that the designated port is connected to the root port through the layer-2 tunnel, the blocking state of the designated port is adjusted to the forwarding state. If the port is the root port, the initial state of the root port may be set to the forwarding state. In addition, the notification message for characterizing the identity of the root port may be sent to the port on the opposite side through the root port. However, in the existing technologies, the root port does not send the notification message to the port on the opposite side. After being improved in this way in the present disclosure, the designated port may be informed that the port on the opposite side is the root port, thereby adjusting the port state of the designated port. If the port is the port other than the designated port and the root port, the initial state of the port may be set to the blocking state. Taking FIG. 1 as an example, after the above-mentioned port state configuration method, since the designated port on the left side of the layer-2 tunnel 1 is connected to the root port, the designated port is adjusted to the forwarding state, and the root port on the right side of the layer-2 tunnel 1 is in the forwarding state, the layer-2 tunnel 1 may normally transmit a data message. Although the ports on the left side of a layer-2 tunnel 2-4 are all the designated ports, the ports on the right side are all alternate ports, so that the state of the designated ports on the left side of the layer-2 tunnel 2-4 remains in the blocking state. In this way, the data message may only be transmitted through the layer-2 tunnel 1, and may not be transmitted on other layer-2 tunnels, thus solving the problem of the waste of flow.

Each embodiment in this specification is described in a progressive manner, and the same or similar parts between the various embodiments may be referred to each other. Each embodiment focuses on the differences from other embodiments. In particular, for the embodiments of the network device, an explanation may be made with reference to the introduction of the aforementioned embodiments of the method.

From the description of the above embodiments, those skilled in the art may clearly understand that each embodiment may be implemented by means of a software plus a necessary general hardware platform, and of course, may further be implemented by means of a hardware. Based on such understanding, the essence of the forgoing technical solution or the part contributing to the existing technology may be embodied in the form of a software product. The computer software product may be stored in a computer readable storage medium such as a ROM/RAM, a magnetic disk, an optical disk or the like, and includes several instructions to cause a computer device (which may be a personal computer, a server, or a network device, etc.) to execute the methods described in various embodiments or some parts of the embodiments.

The forgoing description is only preferred embodiments of the present disclosure, and is not intended to limit the present disclosure. Any modifications, equivalent substitutions, improvements or the like made within the spirit and principles of the present disclosure are included in the scope of protection of the present disclosure.

## Claims

1. A port state configuration method, comprising:
identifying a port type of a current port connected to a layer-2 tunnel,
setting, in response to the current port being a designated port, an initial state of the designated port to a blocking state, and adjusting, in response to the designated port being connected to a root port through the layer-2 tunnel, a state of the designated port from the blocking state to a forwarding state;
setting, in response to the current port being a root port, an initial state of the root port to the forwarding state and sending a notification message for characterizing an identity of a root port to a port on an opposite side through the root port; and
setting, in response to the current port being an alternate port other than the designated port and the root port, an initial state of the alternate port to the blocking state.

2. The method in accordance with claim 1, wherein in response to receiving, by the designated port, the notification message for characterizing the identity of the root port sent by a port on the opposite side, it is determined that the designated port is connected to the root port through the layer-2 tunnel.

3. The method in accordance with claim 1, wherein the notification message is periodically sent via the root port to the port on the opposite side according to a specified time period; the method further comprises:
in response to the designated port that has been adjusted to the forwarding state not receiving the notification message sent by the port on the opposite side within a specified duration, restoring the state of the designated port from the forwarding state to the blocking state.

4. The method in accordance with claim 1, wherein the method further comprises:
setting, in response to a port not connected to a layer-2 tunnel being identified as a designated port, an initial state of the port to the forwarding state.

5. The method in accordance with claim 1, wherein the method is applied to a POP server, the POP server is connected to a system switch on a same side, and POP servers on different sides are connected through layer-2 tunnels; the method further comprises:
assigning a link cost value to each port of the POP server, wherein ports connected to different layer-2 tunnels have different link cost values; and
only one layer-2 tunnel being in the forwarding state at the same time,
selecting, in response to a layer-2 tunnel in the forwarding state is unavailable, a target layer-2 tunnel from remaining available layer-2 tunnels in accordance with the link cost values assigned, and setting the target layer-2 tunnel in the forwarding state.

6. The method in accordance with claim 5, wherein the method further comprises:
receiving, by the system switch, a data message from a client service server and adding, by the system switch, an outer virtual local area network identifier to the data message, wherein the outer virtual local area network identifier is configured to characterize a client to which the data message belongs; wherein on the system switch a target port connected to the POP server is configured with the outer virtual local area network identifier, and the target port is configured as a port type retaining the outer virtual local area network identifier, so that the system switch sends the data message with the outer virtual local area network identifier to the connected POP server through the target port; and
striping, by the POP server, the outer virtual local area network identifier after receiving the data message with the outer virtual local area network identifier, to restore the data message sent by the client service server, and sending, by the POP server, the restored data message to the POP server on the opposite side through the layer-2 tunnel.

7. The method in accordance with claim 6, wherein the client service server and the system switch are further connected through a client switch; the method further comprises:
receiving, by the client switch, the data message sent by each of the client service servers, and adding, by the client switch, an inner virtual local area network identifier to the received data messages when the client service servers are divided into different network segments, wherein the inner virtual local area network identifier is configured to characterize a network segment to which the received data message belongs; and
sending, by the client switch, the data message with the inner virtual local area network identifier to the connected system switch.

8. The method in accordance with claim 7, wherein the method further comprises:
assigning, by the system switch, mutually different outer virtual local area network identifiers to each connected client switch, and adding an outer virtual local area network identifier matching with a current client switch to data messages sent by the current client switch; and
striping, by the POP server, the outer virtual local area network identifier and the inner virtual local area network identifier after receiving the data message with the outer virtual local area network identifier and the inner virtual local area network identifier.

9. The method in accordance with any one of claims 6 to 8, wherein the method further comprises:
pre-creating a first interface for striping the outer virtual local area network identifier and the inner virtual local area network identifier and a second interface for connecting a layer-2 tunnel in the POP server, wherein the first interface and the second interface are bridged.

10. The method in accordance with claim 9, wherein the method further comprises:
creating, by the POP server, a first virtual network adapter with the outer virtual local area network identifier through a physical network adapter in accordance with the outer virtual local area network identifier to be stripped when creating the first interface, and creating a second virtual network adapter with the inner virtual local area network identifier through the first virtual network adapter in accordance with the inner virtual local area network identifier to be stripped; wherein the data message received by the physical adapter is received by the first virtual network adapter after striping the outer virtual local area network identifier, and the data message received by the first virtual network adapter is received by the second virtual network adapter after striping the inner virtual local area network identifier.

11. The method in accordance with claim 6, wherein the method further comprises:
adding, by the POP server, the outer virtual local area network identifier to the received data message after receiving the data message sent by the corresponding POP server on the opposite side, and sending the data message added with the outer virtual local area network identifier to the connected system switch; and
feeding, by the system switch, the data message back to the client service server after striping the outer virtual local area network identifier off the received data message.

12. The method in accordance with claim 11, wherein the client service server and the system switch are further connected through a client switch; the method further comprises:
adding, by the POP server, an inner virtual local area network identifier to the received data message, and sending the data message added with the outer virtual local area network identifier and the inner virtual local area network identifier to the connected system switch; and
striping, by the client switch, the inner virtual local area network identifier off the received data message and providing, by the client switch, the stripped data message to the connected client service server.

13. A network device comprising a plurality of ports connected to at least one layer-2 tunnel, wherein
in response to a respective port of the plurality of ports being a designated port, an initial state of the respective port is set to a blocking state, and in response to the respective port being connected to a root port through one of the at least one layer-2 tunnel, a state of the designated port is adjusted from the blocking state to a forwarding state;
in response to the respective port being a root port, the initial state of the respective port is set to the forwarding state and a notification message for characterizing an identity of a root port is sent to a port on the opposite side through the root port; and
in response to the respective port being an alternate port other than the designated port and the root port, the initial state of the respective port is set to the blocking state.
